(19) Europäisches Patentamt
European Patent Office
Office européen des brevets

(11) EP 0 725 072 A1

(12) EUROPÄISCHE PATENTANMELDUNG

(43) Veröffentlichungstag:
**07.08.1996 Patentblatt 1996/32**

(51) Int. Cl.6: **C07F 9/46**

(21) Anmeldenummer: **96100681.4**

(22) Anmeldetag: **18.01.1996**

(84) Benannte Vertragsstaaten:
**CH DE FR GB IT LI NL**

(30) Priorität: **31.01.1995 DE 19502913**
**31.01.1995 DE 19502911**

(71) Anmelder: **HOECHST AKTIENGESELLSCHAFT**
**65929 Frankfurt am Main (DE)**

(72) Erfinder: **Kleiner, Hans-Jerg, Dr.**
**D-61476 Kronberg (DE)**

# (54) Verfahren zur Herstellung von Arylphosphinigsäurealkylestern

(57) Verfahren zur Herstellung von Arylphosphinigsäurealkylestern der Formel (I)

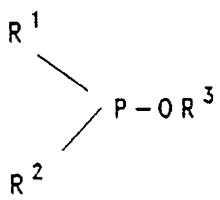

( I )

worin

$R^1$ ($C_1$-$C_{16}$)-Alkyl, Cyclohexyl, Cyclopentyl, Aryl, das auch mit Halogen, ($C_1$-$C_6$)-Alkoxygruppen substituiert sein kann
$R^2$ Aryl, das auch mit Halogen, ($C_1$-$C_6$)-Alkyl, ($C_1$-$C_6$)-Alkoxygruppen substituiert sein kann, wobei $R^1$ und $R^2$ zusammen mit dem Phosphoratom auch einen Ring bilden können und
$R^3$ ($C_1$-$C_4$)-Alkyl

bedeuten, dadurch gekennzeichnet, daß man Halogenarylphosphane der Formel (II)

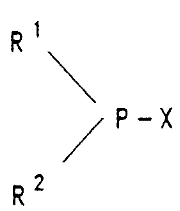

( I I )

worin $R^1$, $R^2$ die oben angeführte Bedeutung besitzen und X für Halogen steht, mit Ammoniak enthaltenden Alkoholen der Formel (III)

$$R^3OH \qquad (III)$$

worin $R^3$ die oben genannte Bedeutung besitzt, umsetzt.

EP 0 725 072 A1

**Beschreibung**

Die Erfindung betrifft ein Verfahren zur Herstellung von Arylphosphinigsäurealkylestern.

Arylphosphinigsäureester, insbesondere Diphenylphosphinigsäureester besitzen beträchtliches Interesse als Zwischenprodukte zur Herstellung von Phosphanoxiden. Diese dienen beispielsweise als Photoinitiatoren (EP-PS 0 007 508). Die Herstellung der Arylphosphinigsäureester erfolgt durch Umsetzung von Halogen-arylphosphanen mit Alkoholen in Gegenwart tertiärer Amine (z.B. EP-PS 0 229 686). Die Zudosierung zusätzlicher mindestens molarer Mengen Ammoniak soll die Reaktion begünstigen (US-PS 3 057 904). Weiterhin ist ein Verfahren zur Herstellung von Phosphonigsäureestern und Phosphinigsäureestern bekannt, bei dem die Neutralisation des anfallenden Halogenwasserstoffs (insbesondere Chlorwasserstoffs) nur mit Ammoniak erfolgt (US-PS 2 903 475). Dieses Verfahren ist aus naheliegenden Gründen besonders interessant, da bei hohen Ausbeuten die wirtschaftlichen Vorteile leicht erkennbar sind. Das Verfahren wird so durchgeführt, daß das Halogenphosphan zu dem Alkohol bei etwa 20°C zudosiert wird und gleichzeitig kontrolliert Ammoniak so eingeleitet wird, daß der gebildete Halogenwasserstoff unverzüglich mit Ammoniak neutralisiert wird. Die Ausbeuten bei diesem Verfahren sind jedoch für Phosphinigsäureester unbefriedigend. So erhält man bei der Umsetzung von Chlordiethylphosphan mit Butanol den Diethylphosphinigsäurebutylester nur in einer Ausbeute von 21,7 % der Theorie. Zudem erfordert dieses Verfahren einen großen Steuerungsaufwand zur Kontrolle von Ph-Wert und Zugabegeschwindigkeit des Ammoniaks.

Es bestand daher der Bedarf, dieses Ammoniak-Verfahren so zu verbessern, daß ohne großen technischen Aufwand die gewünschten Produkte in hoher Ausbeute und hoher Reinheit gebildet werden.

Diese Aufgabe wird gelöst durch ein Verfahren zur Herstellung von Arylphosphinigsäurealkylestern der Formel (I)

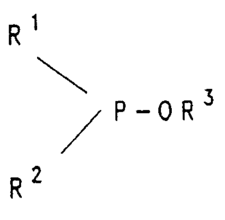

( I )

worin

$R^1$ ($C_1$-$C_{16}$)-Alkyl, Cyclohexyl, Cyclopentyl, Aryl, das auch mit Halogen, ($C_1$-$C_6$)-Alkoxygruppen substituiert sein kann

$R^2$ Aryl, das auch mit Halogen, ($C_1$-$C_6$)-Alkyl, ($C_1$-$C_6$)-Alkoxygruppen substituiert sein kann, wobei $R^1$ und $R^2$ zusammen mit dem Phosphoratom auch einen Ring bilden können und

$R^3$ ($C_1$-$C_4$)-Alkyl

bedeuten, dadurch gekennzeichnet, daß man Halogenarylphosphane der Formel (II)

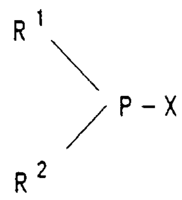

( I I )

worin $R^1$, $R^2$ die oben angeführte Bedeutung besitzen und X für Halogen steht, mit Ammoniak enthaltenden Alkoholen der Formel (III)

$R^3OH$ (III)

worin $R^3$ die oben genannte Bedeutung besitzt, umsetzt.

Wichtig ist das Verfahren z.B. zur Umsetzung von Verbindungen der Formel (II) worin Aryl für Phenyl oder substituiertes Phenyl steht und X Chlor bedeutet.

Von besonderem Interesse ist die Reaktion zur Umsetzung von Methyl-phenyl-chlor-phosphan, Methyl-o-phenyl-chlor-phosphan, Methyl-p-tolyl-chlor-phosphan, Methyl-p-methoxyphenyl-chlor-phosphan, Hexyl-phenyl-chlor-phosphan, Octyl-phenyl-chlor-phosphan, Diphenyl-chlor-phosphan, Bis(p-fluorphenyl)-chlor-phosphan, 2,3-Difluorphenyl-phenyl-chlor-phosphan.

Als Alkohole kommen Methanol, Ethanol, Isopropanol oder n-Butanol z.B. in Frage. Insbesondere Ethanol ist bevorzugt. Die Alkohole sollen möglichst frei von Wasser sein. Sie müssen im Überschuß eingesetzt werden. Dieser Überschuß beträgt im Verhältnis Halogenphosphan: Alkohol 1:3,5 bis 1:20, bevorzugt 1:4,5 bis 1:15 Mol. Zusätzlich können inerte Lösungsmittel wie z.B. Toluol oder Chlorbenzol eingesetzt werden.

Es hat sich in vielen Fällen bewährt, das Verfahren so durchzuführen, daß die Halogenphosphane in Lösungen des Ammoniaks in den Alkoholen eindosiert werden, gegebenenfalls in Gegenwart inerter Lösungsmittel. Die Eindosierung erfolgt vorteilhaft bei -25 bis +5°C, insbesondere -18 bis -5°C, bevorzugt -15 bis -10°C. Der Ammoniak und Halogenphosphan werden im Molverhältnis 1:1 bis 2:1, insbesondere 1,1:1 bis 1,8:1 eingesetzt.

Nach der Eindosierung des Chlorphosphans wird bei Raumtemperatur nachgerührt. Als zusätzliche Maßnahme kann das Anlegen von Vakuum oder das Durchleiten von Inertgasen wie z.B. Stickstoff sinnvoll sein, um Ammoniak auszutreiben.

Als besonders günstige Variante der Aufarbeitung hat sich jedoch mehrstündiges Erhitzen beispielsweise bei Temperaturen von 60 bis 120°C erwiesen, wobei Ammoniak entweicht. Nach etwa 5 bis 20 Stunden ist das Abgasen des Ammoniaks beendet. Nach beendeter Nachbehandlung wird bei Raumtemperatur vom Ammoniumchlorid getrennt und das Filtrat in üblicher Weise destillativ aufgearbeitet.

Überraschenderweise erhält man die gewünschten Endprodukte in hohen Ausbeuten, obwohl die Bildung der Phosphinigsäureamide des Typs $R_2P\text{-}NH_2$ zu erwarten gewesen wäre (Houben-Weyl, Methoden der organischen Chemie, Georg Thieme Verlag Stuttgart, Bd. XII/1, Seite 213, 1963; US-PS 2 903 475).

Für den Fall der Nachbehandlung bei 60 bis 120°C muß es als überraschend bezeichnet werden, daß eine Isomerisierungsreaktion nicht beobachtet werden konnte. Es ist nämlich bekannt, daß rohe Phosphinigsäureester thermisch nicht stabil sind und leicht bei erhöhter Temperatur zu Phosphanoxiden isomerisieren (Houben-Weyl, Methoden der organischen Chemie, Georg Thieme Verlag Stuttgart, Bd. XII/1, Seite 150, 1963).

Eine weitere vorteilhafte Verfahrensvariante besteht darin, die Halogenarlyphosphane bei Temperaturen von -25 bis + 5°C in die Alkohole einzudosieren und anschließend bei diesen Temperaturen Ammoniak einzuleiten.

Diese Verfahrensvariante wird vorteilhaft so durchgeführt, daß in den Alkohol, gegebenenfalls vermischt mit dem Lösungsmittel, unter Stickstoffatmosphäre das Halogenphosphan bei -20 bis 0°C, insbesondere -18 bis -5°C, bevorzugt -15 bis -10°C eindosiert wird und anschließend der gebildete Halogenwasserstoff mit Ammoniak umgesetzt wird.

Gute Ergebnisse werden z.B. erzielt, wenn das Eindosieren des Chlorphosphans etwa eine bis zwei Stunden beträgt und die Umsetzung des Ammoniaks ebenfalls in ein bis zwei Stunden beendet ist. Der Ammoniak wird zweckmäßig im Überschuß eingesetzt, um sicherzustellen, daß das Reaktionsgut im alkalischen Bereich verbleibt. Nach beendeter Umsetzung wird zweckmäßig bei Raumtemperatur nachgerührt, dann vom gebildeten Ammoniumchlorid abgesaugt. Das Filtrat wird in üblicher Weise destillativ aufgearbeitet. Das Verfahren kann auch kontinuierlich durchgeführt werden. Für bestimmte Einsatzgebiete fallen die verfahrensgemäß hergestellten Phosphinigsäureester bereits als Rohprodukte so rein an, daß eine destillative Reinigung unterbleiben kann.

Bei dieser Verfahrensvariante ist besonders überraschend, daß mehrere in der Literatur (US 2,903,475) beschriebene Nebenreaktionen wie z.B.

$$R_2POR' + HCl \rightarrow R_2POH + R'Cl$$

$$2R_2PCl + NH_3 \rightarrow R_2P\text{-}NH_2$$

nicht auftreten. Weiterhin war auch folgende Nebenreaktion zu erwarten:

$$R_2POR' + R_2PCl \rightarrow R_2\overset{\overset{O}{\|}}{P}\text{-}PR_2$$

Beispiel 1

330 g (7,17 Mol) absolutes Ethanol werden unter Stickstoffatmosphäre auf -15°C gekühlt. Dazu werden bei dieser Temperatur unter ständigem Rühren 26,5 g (1,56 Mol) Ammoniak eingegast. Anschließend werden bei dieser Temperatur 200 g (0,907 Mol) Chlor-diphenylphosphan eingetropft. Anschließend läßt man unter Rühren auf Raumtemperatur kommen und hält dann 11 Stunden unter Rückfluß, bis kaum noch Ammoniak abgast. Nun wird abgekühlt, abgesaugt, gewaschen mit Ethanol und getrocknet. Man erhält 48 g rohes Ammoniumchlorid. Das Filtrat wird im Vakuum von Ethanol und eventuell vorhandenem Ammoniak befreit. Der verbliebene Rückstand wird durch Filtration über eine Glasfritte von einem geringfügigen Salzniederschlag befreit. Dann erhält man durch Dünnschichtdestillation bei einer Badtemperatur von 160 bis 175°C und einem Druck von 0,5 mbar 170 g Diphenylphosphinigsäureethylester. Das entspricht einer Ausbeute von 82 % der Theorie.

Beispiel 2

330 g (7,17 Mol) absolutes Ethanol werden unter Stickstoffatmosphäre auf -15°C gekühlt. Dazu werden bei dieser Temperatur 18 g (1,06 Mol) Ammoniak eingegast. Anschließend werden bei dieser Temperatur 200 g (0,907 Mol) Chlor-diphenylphosphan in einer Stunde eingetropft. Anschließend läßt man unter Rühren auf Raumtemperatur kommen und rührt 3,5 Stunden nach. Nun wird gekühlt, abgesaugt und gewaschen mit Ethanol. Das Filtrat wird im Vakuum von Ethanol und eventuell vorhandenem Ammoniak befreit. Der verbliebene Rückstand wird durch Filtration über eine Glasfritte von einem geringfügigen Niederschlag befreit. Dann erhält man durch Dünnschichtdestillation bei einer Badtemperatur von 140°C und 0,3 mbar 172 g Diphenylphosphinigsäureethylester. Das entspricht einer Ausbeute von 83 % der Theorie.

Wird das Verfahren derartig durchgeführt, daß nach dem Ende des Eintropfens des Chlor-diphenylphosphans auf Raumtemperatur gebracht wird, anschließend 12 Stunden am Rückfluß gehalten wird und dann nach dem Abkühlen wie vorhin aufgearbeitet wird, so erhält man 195 g Diphenylphosphinigsäureethylester. Das entspricht einer Ausbeute von 94 % der Theorie.

Beispiel 3

90 g (1,96 Mol) absolutes Ethanol werden unter Stickstoffatmosphäre auf -15°C gekühlt. Nun werden bei dieser Temperatur unter ständigem Rühren 4,95 g (0,29 Mol) Ammoniak eingeleitet. Anschließend werden bei dieser Temperatur 64,1 g (0,25 Mol) Bis-(4-fluorphenyl)-chlor-phosphan während 50 Minuten eingetropft. Anschließend läßt man unter Rühren auf Raumtemperatur kommen und hält dann 12 Stunden unter Rückfluß. Dann wird gekühlt, abgesaugt, gewaschen mit Ethanol und getrocknet. Man erhält 13 g Ammoniumchlorid. Das Filtrat wird im Vakuum vom Ethanol befreit und der Rückstand bei 0,45 mbar destilliert bei einer Übergangstemperatur von 102°C. Man erhält 55 g Bis-(4-fluorphenyl)-phosphinigsäureethylester. Das entspricht einer Ausbeute von 83 % der Theorie.

Beispiel 4

135 g (2,94 Mol) absolutes Ethanol werden unter Stickstoffatmosphäre auf -15°C gekühlt. Nun werden bei dieser Temperatur unter ständigem Rühren 7,4 g (0,435 Mol) Ammoniak eingeleitet. Anschließend werden bei dieser Temperatur 86 g (0,376 Mol) Chlor-n-hexylphenylphosphan in 40 Minuten eingetropft, dann läßt man unter Rühren auf Raumtemperatur kommen, saugt ab und wäscht mit Ethanol. Das Filtrat wird im Vakuum von Ethanol und eventuell vorhandenem Ammoniak befreit. Der verbliebene Rückstand wird destilliert. Man erhält 71 g n-Hexylphenylphosphinigsäureethylester bei 1,1 mbar und einer Übergangstemperatur von 110°C. Das entspricht einer Ausbeute von 79 % der Theorie.

Beispiel 5

50 g (1,09 Mol) absolutes Ethanol werden unter Stickstoffatmosphäre auf -15°C gekühlt. Nun werden bei dieser Temperatur unter ständigem Rühren 3 g (1,76 Mol) Ammoniak eingegast. Anschließend werden bei dieser Temperatur 26 g (1,39 Mol) Phenyl-isopropyl-chlor-phosphan in 30 Minuten eingetropft. Dann wird bei dieser Temperatur 30 Minuten nachgerührt und danach noch 12 Stunden am Rückfluß gekocht. Anschließend wird gekühlt, abgesaugt und mit Ethanol nachgespült. Das Filtrat wird im Vakuum vom Ethanol befreit und der verbliebene Rückstand destilliert. Man erhält 23 g Isopropyl-phenylphosphinigsäureethylester bei 0,07 mbar und einer Übergangstemperatur von 50°C. Das entspricht einer Ausbeute von 85 % der Theorie.

Beispiel 6

1000 g (21,7 Mol) absolutes Ethanol werden unter Stickstoffatmosphäre auf -15°C unter Rühren gekühlt. Nun werden bei dieser Temperatur unter lebhaftem Rühren während einer Stunde und zwanzig Minuten 660 g (3,0 Mol) Chlordiphenylphosphan getropft. Anschließend werden bei weiter lebhaftem Rühren bei dieser Temperatur 76 g (4,47 Mol) Ammoniak eingegast. Dann läßt man unter Rühren auf Raumtemperatur kommen und rührt sechs Stunden nach. Anschließend wird abgesaugt und mit Ethanol nachgespült. Das Filtrat wird im Vakuum von Ethanol und überschüssigem Ammoniak befreit. Man erhält ein Rohprodukt, das durch Filtration über eine Glasfritte von einem geringfügigen Salzniederschlag befreit wird. Durch Dünnschichtdestillation bei einer Badtemperatur von 160 bis 175°C und einem Druck von etwa 0,5 mbar erhält man 635 g Diphenylphosphinigsäureethylester. Das entspricht einer Ausbeute von 92 % der Theorie.

Beispiel 7

915 g (15,25 Mol) n-Propanol werden unter Stickstoffatmosphäre auf -15°C unter Rühren gekühlt. Nun werden bei dieser Temperatur unter lebhaftem Rühren in einer Stunde und 15 Minuten 330 g (1,5 Mol) Chlordiphenylphosphan getropft. Anschließend werden bei weiter lebhaftem Rühren bei dieser Temperatur 38 g (2,24 Mol) Ammoniak eingegast. Dann wird ohne Kühlung zehn Stunden nachgerührt. Nach dem Absaugen des Ammoniumchlorids wird das Filtrat im Vakuum von Propanol und überschüssigem Ammoniak befreit. Der verbleibende Rückstand wird destilliert (Sdp. 122°C bei 0,4 mbar). Man erhält 230 g Diphenylphosphinigsäurepropylester. Das entspricht einer Ausbeute von 63 % der Theorie.

Beispiel 8

210 g (6,56 Mol) absolutes Methanol werden unter Stickstoffatmosphäre auf -15°C gekühlt. Nun werden bei dieser Temperatur 200 g (0,907 Mol) Chlordiphenylphosphan unter lebhaftem Rühren eingetropft. Anschließend werden 18 g (1,06 Mol) Ammoniak eingegast. Dann wird ohne Kühlung 10 Stunden gerührt und abgesaugt. Das Filtrat wird im Vakuum von Methanol und überschüssigem Ammoniak befreit. Der Rückstand wird über eine Glasfritte abgesaugt. Man erhält 143 g rohen Diphenylphosphinigsäureethylester. Das entspricht einer Ausbeute von 73 % der Theorie.

Beispiel 9

87 g (1,90 Mol) absolutes Ethanol werden unter Stickstoffatmosphäre auf -15°C gekühlt. Nun werden bei dieser Temperatur 67 g (0,26 Mol) Bis-(4-fluorphenyl)-chlor-phosphan in 50 Minuten unter lebhaftem Rühren eingetropft. Anschließend werden bei dieser Temperatur 5,2 g (0,31 Mol) Ammoniak eingegast. Dann wird weitergerührt, bis die Raumtemperatur erreicht ist, und weitere 16 Stunden nachgerührt. Anschließend wird abgesaugt und mit Ethanol nachgespült. Das Filtrat wird im Vakuum von Ethanol und überschüssigem Ammoniak befreit. Der verbleibende

Rückstand wird bei 0,45 mbar destilliert, bei einer Übergangstemperatur von 102°C. Man erhält 58 g Bis-(4-fluorphenyl)-phosphinigsäureethylester. Das entspricht einer Ausbeute von 84 % der Theorie.

## Patentansprüche

1. Verfahren zur Herstellung von Arylphosphinigsäurealkylestern der Formel (I)

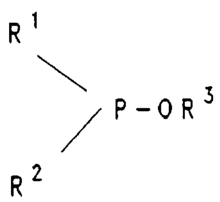

(I)

worin

$R^1$ $(C_1\text{-}C_{16})$-Alkyl, Cyclohexyl, Cyclopentyl, Aryl, das auch mit Halogen, $(C_1\text{-}C_6)$-Alkoxygruppen substituiert sein kann

$R^2$ Aryl, das auch mit Halogen, $(C_1\text{-}C_6)$-Alkyl, $(C_1\text{-}C_6)$-Alkoxygruppen substituiert sein kann, wobei $R^1$ und $R^2$ zusammen mit dem Phosphoratom auch einen Ring bilden können und

$R^3$ $(C_1\text{-}C_4)$-Alkyl

bedeuten, dadurch gekennzeichnet, daß man Halogenarylphosphane der Formel (II)

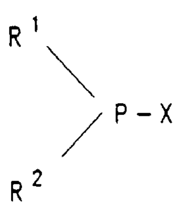

(II)

worin $R^1$, $R^2$ die oben angeführte Bedeutung besitzen und X für Halogen steht, mit Ammoniak enthaltenden Alkoholen der Formel (III)

$$R^3OH \qquad (III)$$

worin $R^3$ die oben genannte Bedeutung besitzt, umsetzt.

2. Verfahren nach Anspruch 1, dadurch gekennzeichnet, daß Aryl für Phenyl, substituiertes Phenyl steht und X Chlor bedeutet.

3. Verfahren nach Anspruch 1, dadurch gekennzeichnet, daß Formel (II) für Methyl-phenyl-chlor-phosphan, Methyl-o-phenyl-chlor-phosphan, Methyl-p-tolyl-chlor-phosphan, Methyl-p-methoxyphenyl-chlor-phosphan` Hexyl-phenyl-chlor-phosphan, Octyl-phenyl-chlor-phosphan, Diphenyl-chlor-phosphan, Bis(p-fluorphenyl)-chlor-phosphan oder 2,3-Difluorphenyl-phenyl-chlor-phosphan steht.

4. Verfahren nach mindestens einem der Ansprüche 1 bis 3, dadurch gekennzeichnet, daß Formel (III) Ethanol bedeutet.

5. Verfahren nach mindestens einem der Ansprüche 1 bis 4, dadurch gekennzeichnet, daß die Alkohole im Überschuß eingesetzt werden, insbesondere im Verhältnis Halogenphosphan:Alkohol von 1:3,5 bis 1:20, bevorzugt 1:4,5 bis 1:15.

6. Verfahren nach mindestens einem der Ansprüche 1 bis 5, dadurch gekennzeichnet, daß das Verfahren bei Temperaturen von -25 bis +5°C, insbesondere -18 bis -5°C, bevorzugt -15 bis -10°C durchgeführt wird.

7. Verfahren nach mindestens einem der Ansprüche 1 bis 6, dadurch gekennzeichnet, daß der eingesetzte Alkohol wasserfrei ist.

8. Verfahren nach mindestens einem der Ansprüche 1 bis 7, dadurch gekennzeichnet, daß Ammoniak und Halogenphosphan im Molverhältnis 1:1 bis 2:1, insbesondere 1,1:1 bis 1,8:1 eingesetzt werden.

9. Verfahren nach mindestens einem der Ansprüche 1 bis 8, dadurch gekennzeichnet, daß vor der Aufarbeitung auf Temperaturen von 60 bis 120°C erhitzt wird.

10. Verfahren nach mindestens einem der Ansprüche 1 bis 6, dadurch gekennzeichnet, daß die Halogenarylphosphane der Formel (II) bei Temperaturen von -25 bis +5°C in die Alkohole der Formel (III) eindosiert werden und anschließend bei dieser Temperatur Ammoniak eingeleitet wird.

Europäisches Patentamt

# EUROPÄISCHER RECHERCHENBERICHT

Nummer der Anmeldung
EP 96 10 0681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-30 35 559 (BASF AG)<br>* Anspruch 1 *<br>--- | 1 | C07F9/46 |
| D,A | EP-A-0 229 686 (STAUFFER CHEMICAL COMPANY)<br>* Anspruch 1 *<br>--- | 1 | |
| D,A | US-A-3 057 904 (T. REETZ ET AL)<br>* Beispiel 10 *<br>--- | 1 | |
| D,A | US-A-2 903 475 (C. LICHTENBERG HAROWITZ)<br>----- | 1 | |

| RECHERCHIERTE SACHGEBIETE (Int.Cl.6) |
|---|
| C07F |

Der vorliegende Recherchenbericht wurde für alle Patentansprüche erstellt

| Recherchenort | Abschlußdatum der Recherche | Prüfer |
|---|---|---|
| BERLIN | 26.April 1996 | Kapteyn, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)